# EUROPEAN PATENT APPLICATION

(11) **EP 1 946 921 A1**
(43) Date of publication of application: **23.07.2008**
(21) Application number: 08150328.6
(22) Date of filing: 16.01.2008
(51) Int. Cl.: B32B 27/04, B32B 27/12, B32B 27/28, C08J 5/04

(54) **Fluoroplastic composite product and manufacturing method thereof**

(30) Priority: 20.01.2007 CN 200710066861
(71) Applicant: Dong, Xiu-Feng, WenZhou Zheijiang (CN)
(72) Inventor: Dong, Xiu-Feng, WenZhou Zheijiang (CN)
(74) Representative: Chaillot, Geneviève

(57) **Abstract**

This invention discloses a fluoroplastic lining manufacture and application technology, and more particularly to a fluoroplastic composite product and its manufacturing method. The product is composed of fiberglass, perfluorinated ethylene-propylene (FEP) and polytetrafluoroethylene (PTFE), wound sequentially on a stainless steel support mold, and then an alkali-free fiberglass strip is wound around an external surface. The product is pressed and sintered at a high-temperature melting condition to permeate the perfluorinated ethylene-propylene (FEP) into gaps on a surface of the fiberglass, and the semi-finished product is taken out from a furnace, and the alkali-free fiberglass strip is removed, and a finished good is formed or cut into plates after demolding. The invention breaks through the technical bottleneck of producing a polytetrafluoroethylene (PTFE) lining for large equipments, reducing the consumption of a large quantity of electric power and coal as well as lowering the transportation cost.

## Description

### BACKGROUND OF THE INVENTION

### Field of the Invention

The present invention relates to a fluoroplastic lining manufacture and application technology, and more particularly to a fluoroplastic composite product and its manufacturing method.

### Description of the Related Art

Fluoroplastic polymers come with a dense molecular structure and a molecular weight over 12000. Since all of its carbon bonds are fluorinated, fluoroplastic polymers can stand almost all chemical media (except high-temperature melting alkaline metals and the fluorine element. In reactions of a chemical medium at the temperature of -80°C to 200°C, the fluoroplastic polymers are excellent media that take no chemical reactions and resist strong corrosions. However, fluoroplastic is a thermoplastic material with a large coefficient of thermal expansion which is approximately equal to ten times of the coefficient of thermal expansion of steel. Furthermore, fluoroplastics cannot be adhered directly with steel components, and thus the special features cannot be applied as they should be.

Major manufacturers including DuPont (USA), Daikin (Japan), Imperial (England), Dow (USA), BASF (Germany) and many other well-known Taiwanese chemical companies have not achieved the direct adhesion of fluoroplastic lining layers with metal components, and the direct manufacture of fluoroplastic lining products at site.

At present, the equipments, containers, towers and vessels used for manufacturing fluoroplastic lining products adopt complex manufacture methods such as hot roll lining, loose lining, sodium naphthalene surface treatment, and high-temperature pressurized sintering, but these methods still have the following drawbacks: (1) A large quantity of energy is consumed, since the heating, lining and sintering processes require 20 hours of work in a sintering furnace with a power of 40KV, and use up over 800 degrees of electric power; (2) Operators have to work at a high-temperature environment, and these methods require a large labor force; (3) The high-temperature sintering and manufacture takes a long time and causes a low working efficiency; (4) Fluoroplastics come with a poor thermal stability, and a large coefficient of thermal deformation. The lining layer may be deformed easily and unusable since the temperature is sometimes cold and sometimes hot during the application process. As a result, the life expectancy is short; (5) The fluoroplastic lining layer improves the strength by its thickness, and thus greatly increasing the manufacturing cost and wasting energy; and (6) The aforementioned methods are not applicable for large equipments or corrosion-resisting linings.

The adhesion of fluoroplastic lining layer with a metal surface is one of the most difficult technologies in the world, and the manufacture of fluoroplastic with metal components is even more difficult, which is also one of the technical issues that demands immediate solutions.

### SUMMARY OF THE INVENTION

The primary objective of the present invention is to provide a fluoroplastic composite product and its manufacturing method to manufacturing fluoroplastic lining with metal components at site.

To achieve the foregoing objectives, the present invention adopts the following technical solutions:
I. A fluoroplastic composite product is comprised of fiberglass, perfluorinated ethylene-propylene (FEP), and polytetrafluoroethylene (PTFE) that are melt, combined, and pressed sequentially, and the perfluorinated ethylene-propylene (FEP) is permeated into the gaps disposed on a surface of the fiberglass.
II. A method of manufacturing a fluoroplastic composite product comprises the steps of:
   1. producing a support mold corresponding to a workpiece of a product according to different requirements on the shape and the size of the workpiece of a fluoroplastic composite product;
   2. pressing the polytetrafluoroethylene (PTFE) into a bar, and cutting the polytetrafluoroethylene (PTFE) bar into a thin film strip with predetermined thickness and width;
   3. winding the cut polytetrafluoroethylene (PTFE) thin film strip around the surface of the mold, and calculating the number of thin film layers of the wound polytetrafluoroethylene (PTFE) strips according to the required thickness to meet the requirement;
   4. winding a perfluorinated ethylene-propylene (FEP) thin film around the wound polytetrafluoroethylene (PTFE) surface until the number of wound layers reaches a predetermined thickness;
   5. laying a fiberglass cloth or strip on the wound perfluorinated ethylene-propylene (FEP) surface, and then winding an alkali-free fiberglass strip around an external surface; and
   6. pressing and sintering the wound semi-finished good, taking the semi-finished good out from a furnace for cooling, removing the alkali-free fiberglass strip, and demolding to form a finished good or cut the finished good into plates.

The alkali-free fiberglass strip is a thermosetting fabric, which will be contracted naturally inward when it is heated, and the polytetrafluoroethylene (PTFE) will be expanded naturally outward when it is heated, and the pressure produced between them presses and combines the polytetrafluoroethylene (PTFE) and the perfluorinated ethylene-propylene (FEP) under a high-temperature melting condition.
At high temperature, the semi-fluid perfluorinated ethylene-propylene (FEP) is permeated into the gaps disposed on a surface of the fiberglass to achieve three layers in one. Since the surface of the fluoroplastic composite product is wound with the fiberglass cloth or strip, a well-developed polytetrafluoroethylene (PTFE) adhesive is passed through an intermediate of the fiberglass cloth or strip to adhere the fluoroplastic composite product with metal components without heating the lining. Since the polytetrafluoroethylene (PTFE) adhesive has a better adhesive property at a condition without heating than a condition with heating, therefore the lining can be implemented at site.

The present invention can break through the technical bottleneck of implementing the polytetrafluoroethylene (PTFE) at site, and overcome the technical difficulty of producing a polytetrafluoroethylene (PTFE) lining for large equipments, reducing the consumption of a large quantity of electric power and coal as well as the transportation cost. The invention also greatly extends the scope of applicability of the polytetrafluoroethylene (PTFE) lining equipments and replaces the expensive rare metal products, so as to enhance economic effectiveness, lower production cost, reduce pollutions, and contribute to our economy and society.

An object of the invention is to provide a fluoroplastic composite product, comprising: a fiberglass, a perfluorinated ethylene-propylene (FEP) and a polytetrafluoroethylene (PTFE), being sequentially melted, combined and pressed, and said perfluorinated ethylene-propylene (FEP) being permeated into gaps disposed on a surface of said fiberglass.

Another object of the invention is a method of manufacturing a fluoroplastic composite product as mentioned above, characterized in that:
(1) producing a support mold corresponding to a workpiece of said product according to different requirements on the shape and the size of said workpiece of said fluoroplastic composite product;
(2) pressing the polytetrafluoroethylene (PTFE) into a bar, and cutting said polytetrafluoroethylene (PTFE) bar into a thin film strip with predetermined thickness and width;
(3) winding said cut polytetrafluoroethylene (PTFE) thin film strip around the surface of said mold, and calculating the number of thin film layers of said wound polytetrafluoroethylene (PTFE) strips according to the required thickness to meet the requirement;
(4) winding a perfluorinated ethylene-propylene (FEP) thin film around said wound polytetrafluoroethylene (PTFE) surface until the number of wound layers reaches a predetermined thickness;
(5) laying a fiberglass cloth or strip on said wound perfluorinated ethylene-propylene (FEP) surface, and then winding an alkali-free fiberglass strip around an external surface; and
(6) pressing and sintering the wound semi-finished good, taking the semi-finished good out from a furnace for cooling, removing the alkali-free fiberglass strip, and demolding to form a finished good or cut the finished good into plates.

Preferably, said cut polytetrafluoroethylene (PTFE) thin film strip has a thickness of 0.1mm and a width of 5mm~8mm, and said perfluorinated ethylene-propylene (FEP) thin film has a thickness and a width equal to those of said polytetrafluoroethylene (PTFE) thin film, and said perfluorinated ethylene-propylene (FEP) thin film is wound to a thickness of 1mm~2mm, and said fiberglass cloth or strip is laid to a thickness equal to or greater than 0.5mm.

To make it easier for the examiner to understand the object, shape, structure, device, characteristics and functions of this invention, the specification accompanied by the drawings is described as follows.

### BRIEF DESCRIPTION OF THE DRAWINGS

FIG. 1 is a planar view of structures of various products in accordance with a preferred embodiment of the present invention;
FIG. 2 is a perspective view of a structure of a product in accordance with a preferred embodiment of the present invention; and
FIG. 3 is a flow chart of a manufacturing method and an application in accordance with a preferred embodiment of the present invention.

### DETAILED DESCRIPTION OF THE PREFERRED EMBODIMENTS

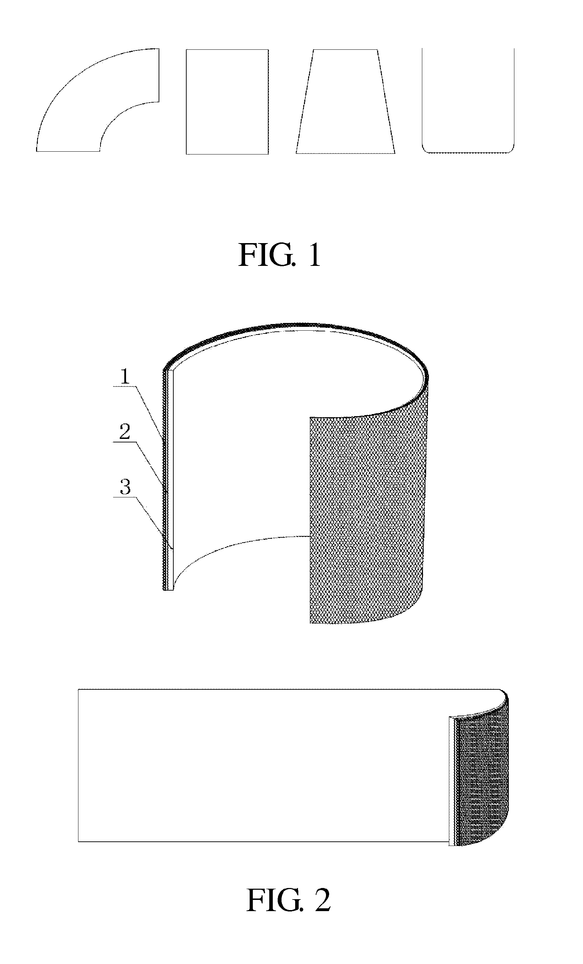

Referring to the preferred embodiment as shown in FIG. 2, a fluoroplastic composite product is comprised of fiberglass 1, perfluorinated ethylene-propylene (FEP) 2, and polytetrafluoroethylene (PTFE) 3, being melted, combined and pressed sequentially, and the perfluorinated ethylene-propylene (FEP) 2 is permeated into gaps disposed on a surface of the fiberglass 1.

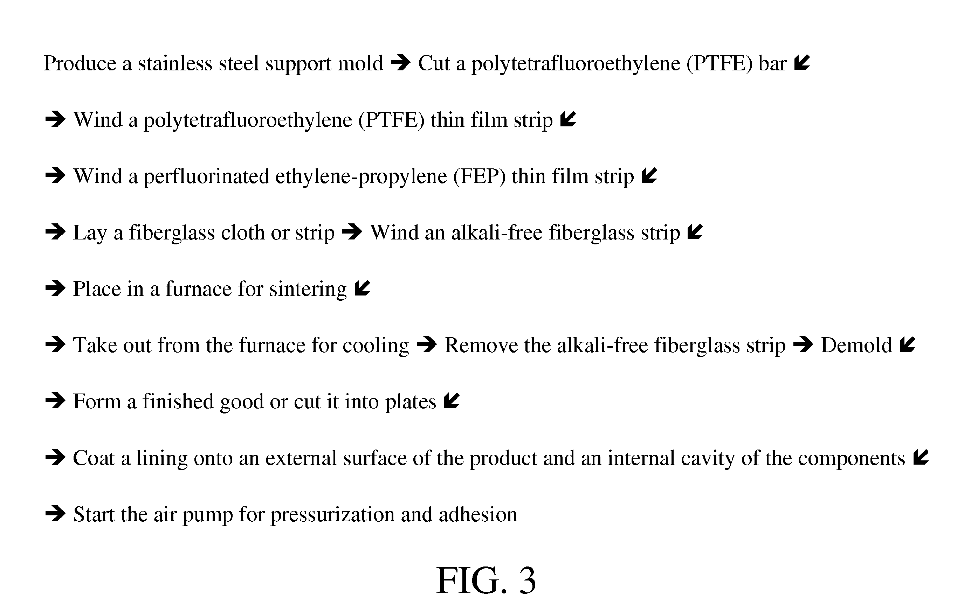

The method of manufacturing a fluoroplastic composite product as shown in FIG. 3 is described as follows:
1. A support mold made of stainless steel and having a shape and a size corresponding to those of the workpiece of a fluoroplastic composite product is produced according to different requirements of the shape and the size of the fluoroplastic composite product (as shown in FIG. 1).
2. The polytetrafluoroethylene (PTFE) is pressed into a bar of Φ 200×H100, and the PTFE bar is cut into thin film strips of 0.1mm (thick) x 5mm-8mm (wide) each.
3. The cut thin film strip is wound around the surface of the stainless steel workpiece mold. The number of thin film polytetrafluoroethylene (PTFE) layers is calculated according to the required thickness of the product to meet the requirements of the product.
4. After a perfluorinated ethylene-propylene (FEP) thin film is wound around the wound polytetrafluoroethylene (PTFE) surface, the thickness and width of the perfluorinated ethylene-propylene (FEP) film thin are equal to those of the polytetrafluoroethylene (PTFE) thin film, and the wound thickness is equal to 1mm-2mm.
5. A fiberglass cloth or strip equal to or greater than 0.5 mm thick is wound around the surface of the perfluorinated ethylene-propylene (FEP), and an alkali-free fiberglass strip is wound around the external surface, such that the product can stand the outward expansion of the fluoroplastic during the sintering and shaping processes.
6. The wound semi-finished good is pressed and sintered at a high-temperature melting condition, and then taken out from a furnace for cooling. The alkali-free fiberglass strip is removed, and finally the finished goods is formed or cut into plates after demolding.

When use, the fluoroplastic composite product is placed into a cavity of a metal component, and a lining is applied onto the surface of the cavity of the metal component. The polytetrafluoroethylene (PTFE) adhesive is coated onto the surface of the fiberglass at the external layer of the fluoroplastic composite product, and then the same polytetrafluoroethylene (PTFE) adhesive is coated onto the surface of the cavity of the metal component. The fluoroplastic composite product is pressurized by an air pump, such that the fluoroplastic composite product is adhered closely onto the internal surface of the metal component to cure the lining naturally.

In summation of the description above, the present invention has the following advantages over the prior art:
1. With the invention, lining layers of composite products in various different shapes can be produced by using molds. The largest polytetrafluoroethylene (PTFE) lining plate of (6m wide) x (18.8m long) can be made by using a mold of Φ6M×H6M.
2. Thermal expansions and contractions of the polytetrafluoroethylene (PTFE) lining layer can be controlled by adopting fiberglass stripes.
3. The lining technique is simple, easy, and power-saving. No heating or sintering is needed at site, and thus there will be no limitation on the manufacturing site. The manufacture simply requires an air pump for pressurization, and consumes about 50 degrees of electric power, and thus the invention can save about 750 degrees each time, and greatly reduces the consumption of electric power and coals.
4. The invention can reduce the required labor force, and operators no longer have to work at a high temperature environment.
5. The transportation cost can be lowered. For example, an equipment with a lining weighs approximately one ton, and the lining weighs approximately 200Kg which is about 10% of the total weight. If the lining is applied at site, then it will save 90% of the transportation cost, and greatly reduce the burden of transportation and the consumption of energy.
6. The manufacturing time can be reduced, and the working efficiency can be improved. In addition, maintenance and replacement are convenient, and the down time can be minimized. The price is 76% of the high temperature sintering and combination only.

## Claims

1. A fluoroplastic composite product, comprising: a fiberglass, a perfluorinated ethylene-propylene (FEP) and a polytetrafluoroethylene (PTFE), being sequentially melted, combined and pressed, and said perfluorinated ethylene-propylene (FEP) being permeated into gaps disposed on a surface of said fiberglass.

2. A method of manufacturing a fluoroplastic composite product as recited in claim 1, **characterized in that**:
(1) producing a support mold corresponding to a workpiece of said product according to different requirements on the shape and the size of said workpiece of said fluoroplastic composite product;
(2) pressing the polytetrafluoroethylene (PTFE) into a bar, and cutting said polytetrafluoroethylene (PTFE) bar into a thin film strip with predetermined thickness and width;
(3) winding said cut polytetrafluoroethylene (PTFE) thin film strip around the surface of said mold, and calculating the number of thin film layers of said wound polytetrafluoroethylene (PTFE) strips according to the required thickness to meet the requirement;
(4) winding a perfluorinated ethylene-propylene (FEP) thin film around said wound polytetrafluoroethylene (PTFE) surface until the number of wound layers reaches a predetermined thickness;
(5) laying a fiberglass cloth or strip on said wound perfluorinated ethylene-propylene (FEP) surface, and then winding an alkali-free fiberglass strip around an external surface; and
(6) pressing and sintering the wound semi-finished good, taking the semi-finished good out from a furnace for cooling, removing the alkali-free fiberglass strip, and demolding to form a finished good or cut the finished good into plates.

3. The method of manufacturing a fluoroplastic composite product as recited in claim 2, **characterized in that** said cut polytetrafluoroethylene (PTFE) thin film strip has a thickness of 0.1mm and a width of 5mm~8mm, and said perfluorinated ethylene-propylene (FEP) thin film has a thickness and a width equal to those of said polytetrafluoroethylene (PTFE) thin film, and said perfluorinated ethylene-propylene (FEP) thin film is wound to a thickness of 1mm~2mm, and said fiberglass cloth or strip is laid to a thickness equal to or greater than 0.5mm.
